Europäisches Patentamt

European Patent Office

Office européen des brevets

(19)

(11) **EP 1 587 234 A1**

(12) **EUROPEAN PATENT APPLICATION**

(43) Date of publication:
   **19.10.2005 Bulletin 2005/42**

(51) Int Cl.⁷: **H04L 1/00**, H04L 25/06

(21) Application number: **04008831.2**

(22) Date of filing: **14.04.2004**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL HR LT LV MK**

(71) Applicant: **DEUTSCHE THOMSON-BRANDT
   GMBH
   78048 Villingen-Schwenningen (DE)**

(72) Inventor: **Feng, Qilong, Dr.
   78050 Villingen-Schwenningen (DE)**

(74) Representative: **Thies, Stephan et al
   Deutsche Thomson-Brandt GmbH,
   European Patent Operations,
   Karl-Wiechert-Allee 74
   30625 Hannover (DE)**

(54) **Adaptive viterbi detector**

(57)   The present invention relates to an adaptive Viterbi detector, and to an apparatus for reading from and/or writing to recording media using such adaptive Viterbi detector.

It is an object of the invention to offer an alternative design for an adaptive Viterbi detector in order to improve the phase locking and the correct data restoring for an RF signal exhibiting a strong vertical asymmetry.

This object is achieved by a Viterbi detector with adaptive reference levels for bit recovery from an input RF signal, in which the reference levels are adaptive to the incoming RF signal, with means for optimising the reference levels for every state transition based on the deviation between the input RF level and the corresponding reference level, which is determined by the current state with the largest likelihood.

Fig. 3

**Description**

The present invention relates to an adaptive Viterbi detector, and to an apparatus for reading from and/or writing to recording media using such adaptive Viterbi detector.

Optical and magnetical disk media today are the main media widely used not only in the industry but also in our daily life. Along with development of the optical recording techniques, the optical recording and rewriting speeds are rapidly increasing. Because of the variation of the media sensitivity, focus, and insufficient recording laser power control, the recorded pits deviate from the nominal size. A positive deviation causes pits to be effectively longer than the lands of the same nominal length, while a negative deviation causes pits to be effectively shorter than lands of the same nominal length. As a result, a reproduced RF signal, which is scanned from such a pre-marked or recorded disc, exhibits a vertical distortion phenomenon known as asymmetry. This vertical asymmetrical distortion leads to difficulties with regard to the phase locking and increases the bit error rate (BER) of the decoded bit stream for the bit recovery in acquisition, which works based on a conventional channel mode and employs a usual partial response maximum likelihood (PRML) detector with fixed decision levels.

US Patent application 2002/0174402 A1 and US patent application 2002/0073378 A1 disclose conventional six states Viterbi detectors with symmetric reference levels PRML detectors and a method for saving hardware in a path memory.

Based on two different base-levels, US Patent application 2002/0021772 A1 teaches a method in which two Viterbi detectors are employed for decoding the same waveform but with different DC levels. This method improves the performance of bit recovery for an input RF signal with an asymmetrical waveform of the positive pulses and the negative pulses. However, it does not improve the performance of bit recovery for an asymmetrical RF signal with regard to the deviation between the middle positions of the shortest pulses and the longest pulses.

US patent application 2001/0016002 A1 discloses a Viterbi detector with a Viterbi level decision unit, which decides the reference levels by four consecutive input signals and updates the reference levels under special conditions. This method improves the decoding for an asymmetrical input signal, but for a strong vertical asymmetrical (asymmetry > 25%) input RF signal, or an RF signal which is scanned from a strongly fine scratched disc, it does not operate or only operates with an increased BER, because the Viterbi level decision unit does not operate correctly for such an RF input signal and an included adaptive finite impulse response (FIR) filter cannot reduce the vertical asymmetry effect and the rapidly changing RF amplitude.

In "Adaptive Partial-Response Maximum-Likelihood Detection in Optical Recording Media", Jpn. J. Appl. Phys. Vol. 41 (2002), pp. 1789-1790, Ide describes an adaptive PRML detector, which improves the bit recovery by means of adaptive reference levels. In the disclosed adaptive PRML detector, a mismatching detection is based on the last maximum likelihood bit.

In " Combined Adaptive Controlled Partial Response and Maximum Likelihood Signal Processing for High-Density Optical Disks", Jpn. J. Appl. Phys. Vol. 42 (2003), pp. 924-930, Takehara et al. disclose a method for improving the bit recovery from a high-density optical disk by means of an adaptive FIR filter and a Viterbi detector with adaptive reference levels.

It is an object of the present invention to solve the above mentioned problems and to offer an alternative design for an adaptive Viterbi detector in order to improve the phase locking and the correct data restoring for an RF signal exhibiting a strong vertical asymmetry.

This object is achieved by a Viterbi detector with adaptive reference levels for bit recovery from an input RF signal, in which the reference levels are adaptive to the incoming RF signal, with means for optimising the reference levels for every state transition based on the deviation between the input RF level and the corresponding reference level, which is determined by the current state with the largest likelihood.

Favourably, the optimised base reference level is also used for correcting a slicer level for improving the phase locking in a digital phase-locked loop (DPLL). Compared with conventional adaptive Viterbi detectors, which use an adaptive equalizer, this Viterbi detector has a greatly improved bit error rate (BER) of bit recovery during data acquisition for a strongly vertically asymmetric RF signal, and a greatly increased quality and validity of the corresponding restored data.

Advantageously, an enhanced channel model for an RF signal generator is used, which allows to describe the vertical asymmetrical RF signal with asymmetrical PR coefficients, which are based on symmetrical fixed PR coefficients and are compensated with the deviations from these symmetrical and fixed PR coefficients. The fixed PR coefficients can be, for example, PR (3, 4, 4, 3) or PR (1, 2, 2, 1).

Favourably, a digital automatic gain control (DAGC) block detects the RF amplitude and provides a prompt proportional RF amplitude adjustment. This allows to improve the adaptive reference levels for the RF signal, especially for an RF signal scanned from a disk having a defect area or a strongly fine scratched surface.

Advantageously, a DC-offset is detected from the output decoded bit and a corresponding signal is fed back to the input RF signal for cancelling the DC-part in the output decoded bit. This improves both the performance of the Viterbi detector as well as the BER of the decoded bit stream.

Favourably, the RF signal is further corrected by the base reference level. In this way the RF input signal for a later event decision by an event and phase detector is not only DC-free but also asymmetry compensated. The DC-free correction and asymmetry compensation allow a more accurate event decision and corresponding phase information for an asymmetrical RF signal, especially for a strong asymmetric RF signal with an asymmetry >25%. The DPLL block achieves a faster phase locking due to the correct event decision and corresponding accurate phase information, which are output by the event and phase detector.

Advantageously, the difference between the upper and lower envelopes of the longest pulses is used for the RF amplitude measurement. By means of this measure the RF amplitude measurement is more accurate. This also has a positive effect on the DAGC amplifying result.

Favourably, in the reference level determination block, the five channel reference levels share one low-pass filter. Usually two large bit-width adders are needed for each of the five channels. According to the invention, however, only two large bit-width adders are necessary for all five channels. In this way the hardware components are greatly reduced.

Compared with the adaptive PRML detector described by Ide, according to the invention the mismatching detection is based on the current maximum likelihood, while in the known detector it is based on the last maximum likelihood bit stream. In addition, according to the known detector the bits passing through the path memory for finding the optimum and for updating the reference levels are serial, while according to the invention this is done simultaneously. The differences lead to a number of advantages. The reference levels are updated with a minimum loop delay and more rapidly. Because of this minimum loop delay, a FIFO buffer for delaying the equalized RF signal can be omitted, which saves hardware. Because of the rapid updating of the reference levels the effect of mismatching is reduced to a minimum for strongly fine scratched disks. Though the adaptive reference levels are not very accurate because of using the current maximum likelihood decoded bit stream, the bits which are incorrectly decoded because of the inaccurate reference levels are later corrected when they pass through the path memory.

Compared with the Viterbi detector with adaptive reference levels disclosed by Takehara et al., according to the known Viterbi detector a reference RF signal generator is used in the adaptive control unit for generating a reference RF signal from the decoded bit stream. This signal generator is designed in accordance with the conventional RF signal generating principle and generates only a symmetrical RF signal. The reference levels are, therefore, adapted with an external reference level compensator, which changes the reference levels according to the least mean square of the mismatch between an equalized RF signal and the generated signal. According to the invention, however, the adaptation in realized in the reference signal generation by means of an adaptive gain for the enhanced signal generator. According to Takehara et al. the decoded bit stream is used for the reference signal generation. However, there usually is a great delay between the input RF signal, which is delivered to the Viterbi detector, and the decoded bit stream. For a strongly fine scratched disk this delay sometimes causes a wrong adaptation, i.e. the RF mismatching increases because of the delayed adaptation. In contrast, according to the invention every bit clock one of the reference levels is updated in accordance with the current largest likelihood.

Therefore, the delay and the resulting wrong adaptation are minimized.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:

Fig. 1       shows a conventional RF signal encoder with PR (3, 4, 4, 3) characteristic;

Fig. 2       shows an adaptive RF signal encoder with PR (a, b, c, d) characteristic;

Fig. 3       depicts a block diagram of a data restoring system;

Fig. 4       shows an asymmetrical RF signal and its adaptive PRML description;

Fig. 5       depicts a digital automatic gain control (DAGC);

Fig. 6       shows an RF amplitude envelopes detector;

Fig. 7       depicts a DC-offset detector;

Fig. 8       shows the phase & event detector;

Fig. 9      depicts the structure of an adaptive Viterbi detector;

Fig. 10     shows a state transition;

Fig. 11     depicts a Trellis diagram;

Fig. 12     shows the branch metric calculation;

Fig. 13     depicts the ACS calculation;

Fig. 14     shows a minimum path metric detector;

Fig. 15     depicts a position encoder;

Fig. 16     shows the offset subtraction;

Fig. 17     depicts the path memory;

Fig. 18     shows the maximum likelihood determination; and

Fig. 19     depicts the reference level determination.

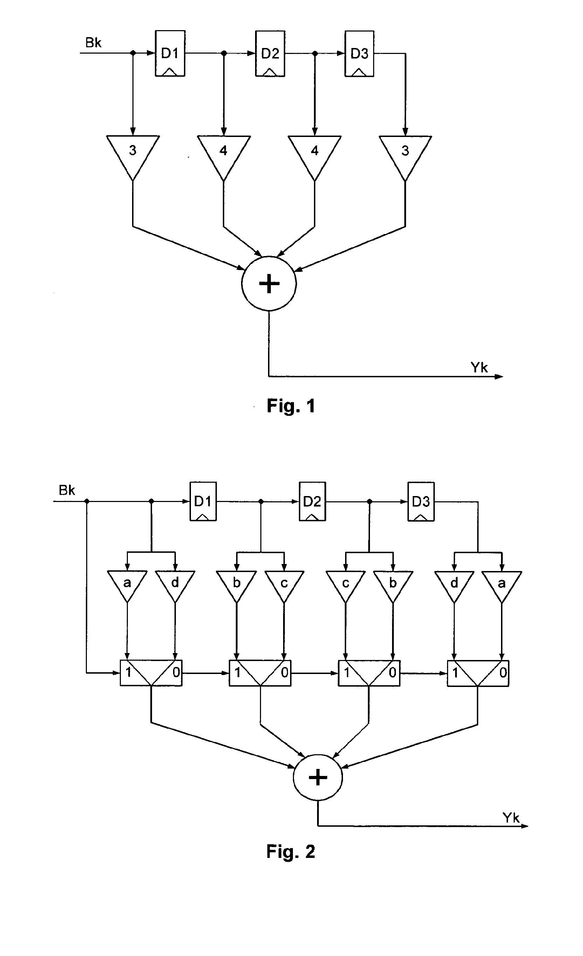

Fig. 1 shows the conventional structure of an encoder with a PR (3, 4, 4, 3) characteristic for implementing the encoding operation for obtaining the bit output from a channel bit pulse train, which is recoded on a disk. The recoding signal and later the scanned signal, which is generated by this encoder, should always have a perfectly symmetrical waveform.

However, because of variations in media sensitivity, focus, and deviations of the recording laser power from a nominal value, there is always the phenomenon that the pits are either longer than the lands of the same nominal size (overetching) or the opposite, i.e. the pits are shorter than the lands of the same nominal size (underetching). This phenomenon not only causes a distortion of the waveform, in that the positive pulses and the negative pulses have asymmetrical forms, but also a deviation between middle position of the shortest pulses (e.g. 3T for RLL (2, 10)) and the longest pulses (e.g. 11T for RLL (2, 10)). Both effects lead to difficulties in the bit decoding from the scanned RF signal as well as to an increased BER.

The phenomenon of vertical asymmetry can be described by an enhanced channel model with a PR (a, b, c, d) characteristic, whose structure is illustrated in Fig. 2. The partial response coefficients a, b, c, d can be considered as conventional fixed coefficients (e.g. (3, 4, 4, 3)) with deviations $\delta_a$, $\delta_b$, $\delta_c$, $\delta_d$ respectively, and can be used for the description of the scanned RF signal having a vertically asymmetrical waveform. The deviations correspond to the general effect of the above-mentioned variations in media sensitivity, focus and deviation of recoding laser power from a nominal value. They differ for different disks, which are pre-marked, recoded or written by different devices or recorders. Therefore, they are favourably updated and optimised for every disk in order to optimise the performance of the Viterbi detector.

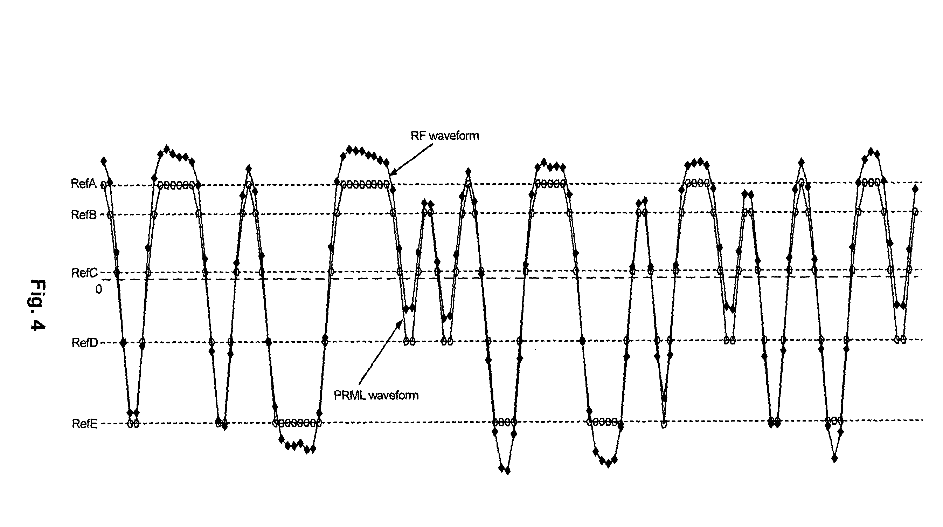

Fig. 4 depicts the simulation of a scanned vertically asymmetrical RF signal, which is described with the dynamically updated reference levels. The current partial response maximum likelihood waveform, which currently has the highest likelihood according to the current updated reference levels, is also indicated in the simulation.

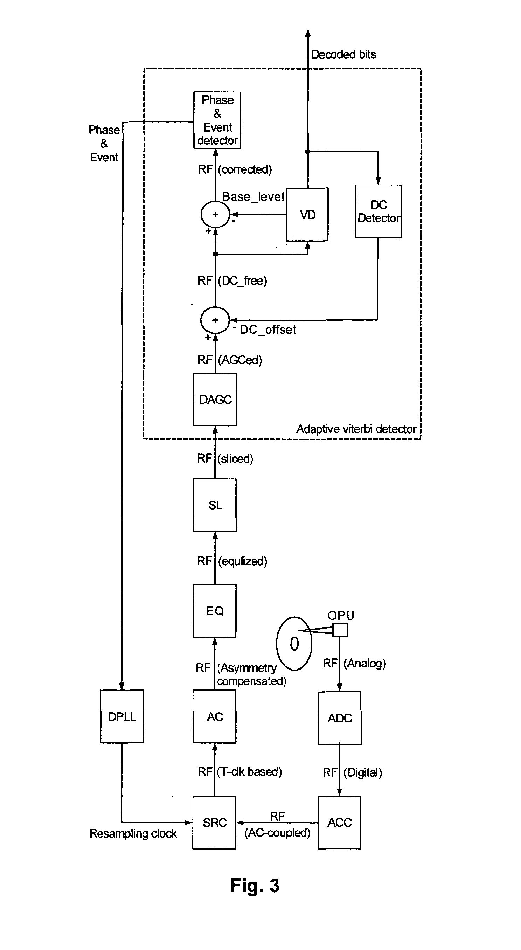

Fig. 3 shows a block diagram of a data restoring system as well as the position and the components of the adaptive Viterbi detector.

The pre-marked or recorded information on the optical disk is scanned by an optical pickup unit (OPU). The obtained analog RF signal coming from the OPU is then digitised by an analog-to-digital-converter (ADC). An AC-coupling block (ACC) filters the DC-component in the RF signal and a sampling rate converter (SRC) resamples the AC-coupled RF signal. The sampling rate is determined by the T-clock, which is generated in a digital PLL block (DPLL) and corresponds to the decoded bit rate. An asymmetry compensation (AC) monitors the asymmetry in the RF signal and dynamically compensates the asymmetrical part of the RF signal. The compensated RF signal is then equalized and sliced by a matching equalizer block (EQ) and slicer block (Slicer), respectively. The sliced RF signal is input into the adaptive Viterbi detector (VD), the decoded bit stream is output from the Viterbi detector. Zero-crossing events and their phase information are obtained by the Viterbi detector and delivered to the DPLL block for phase locking.

The adaptive Viterbi detector includes a digital automatic gain control (DAGC), a DC-detector, a phase and events detector and a six-states adaptive Viterbi detector.

The DAGC receives the equalized and sliced T-clock based RF signal and detects the upper and lower envelopes of the longest pulse. The difference between the upper and lower envelopes is the amplitude of the input RF signal. The amplitude of the input RF signal is then automatically controlled by means of proportional amplifying based on the amplitude detection. The DAGC is positioned subsequent to the equalisation and slicing of the RF signal for minimizing the large amplitude changes in order to reduce the influence of strongly changing reference levels for the disks with defects or a strongly fine scratched surface.

The working principle of the DAGC is illustrated in Fig. 5. The upper and lower envelopes of the longest pulse (Compact Disk (CD):11T; Digital Versatile Disk (DVD):14T; BluRay Disk (BD):8T) are detected simultaneously by the envelope detector. The RF signal amplitude is obtained from the difference between these two envelopes, which is realized by an adder after the envelope detector. The detected RF amplitude is then amplified proportionally in accordance with the DAGC-gain, which corresponds to the algorithm $DAGC\_Gain = \frac{objective\_amplitude}{detected\_amplitude}$ . This is realized by a Look-Up-Table (LUT). LP1 and LP2 are low pass filters for reducing the influence of the high frequency noise in the RF amplitude.

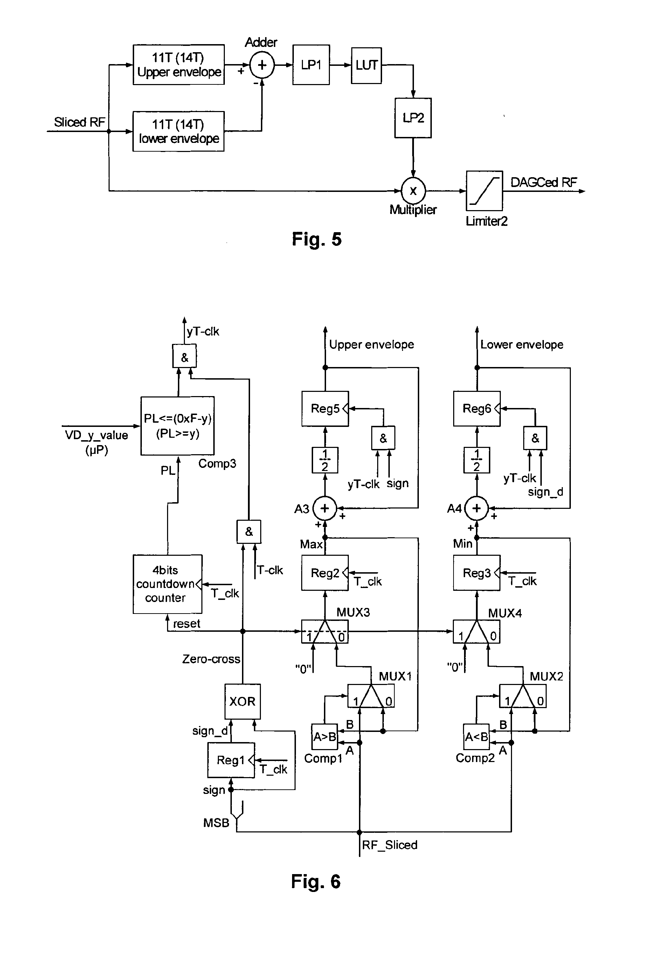

Fig. 6 shows the detection of the upper and lower envelopes of the longest pulses. The pulse length is detected and selected by means of the zero-crossing information. The detected temporal maximum value and minimum value are saved in a first register (Reg2) and a second register (Reg3) and are used for updating the upper and lower envelopes when the detected pulse length satisfies the condition of the longest pulse in the input RF signal.

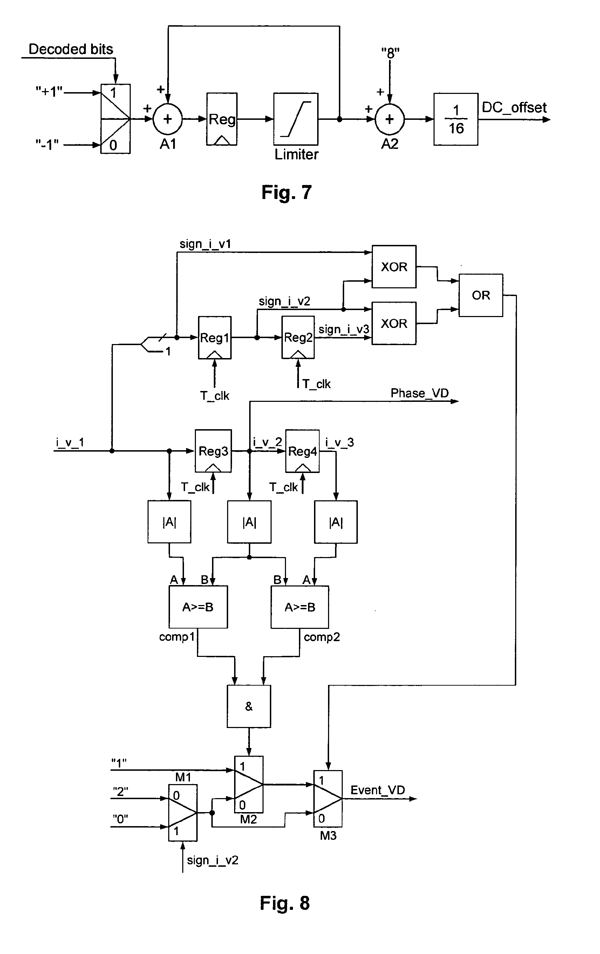

The DC-offset detector, which is depicted in Fig. 7, detects the DC-part of the decoded bit stream, which comes from the six-states adaptive Viterbi detector (VD), and feeds back a signal corresponding to the detected DC-parts to the DAGCed-RF signal for correcting the zero-crossing level and further for cancelling the DC-part in the output bit stream. It operates based on the theory of the DC-free modulation during the pre-marking or recording of the RF signal on the disk. The decoded bits "1" and "0" are recognized with level "+1" and level "-1", respectively. According to the DC-free modulation principle during the pre-marking or recording of the RF signal on the disk, the average level (DC-part) of the decoded bit stream should be zero. Based on this principle, the DC-part of the decoded bit stream is obtained with the aid of the low-pass filtered levels "+1" and "-1", corresponding to the decoded bit values "1" and "0". The register and adder (A1) function as an integrator for obtaining the sum of the output of the multiplexer. The limiter is used for avoiding an overflow of the integrator. The addition of "8" serves as a rounding function, while the division by "16" together with the summing function has the effect of low pass filter.

The DC-part, which is detected from the decoded bit stream by the DC-offset detector, is then cancelled from the DAGCed-RF signal. The DC-cancelled RF signal is further corrected by the middle reference level of the six-states adaptive Viterbi detector. Subsequently the corrected RF signal is checked for zero-crossing events. The checking result and the corresponding phase information are then provided to the DPLL for phase locking.

The hardware realization of the phase & event detector is illustrated in Fig. 8. The phase & event detector searches the input signal for the occurrence of both a different sign with respect to the previous input signal or the next input signal and a smallest distance to the zero axis. If the input signal satisfies the above conditions, the time when the conditions are satisfied is recognized as the edge of the pulse. The distance is considered as the edge phase. If the input signal does not satisfy the conditions, the phase and event are used only to indicate the polarity of the current pulse. The edge and the edge phase are used for phase locking.

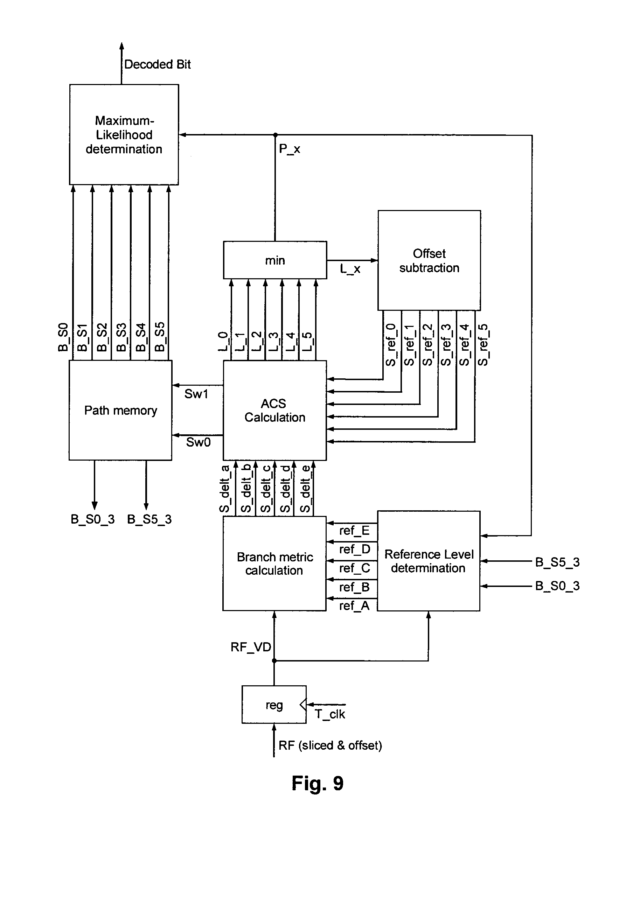

The six-states adaptive Viterbi detector is the core of the adaptive Viterbi detector. It includes a branch metric calculation sub-block, an add-compare-select (ACS) calculation sub-block, a minimum path metric detector sub-block, an offset subtraction sub-block, a path memory sub-block, and a maximum likelihood determination sub-block. The structure of the adaptive six-states Viterbi detector is illustrated in Fig. 9.

Based on the arrangement of the channel signal generator for the RF signal with a PR (a, b, c, d) characteristic, which is illustrated in Fig. 2, the last three bits of the input bit train can have eight states: (0,0,0), (0,0,1), (0,1,0), (0,1,1), (1,0,0), (1,0,1), (1,1,0) and (1,1,1).

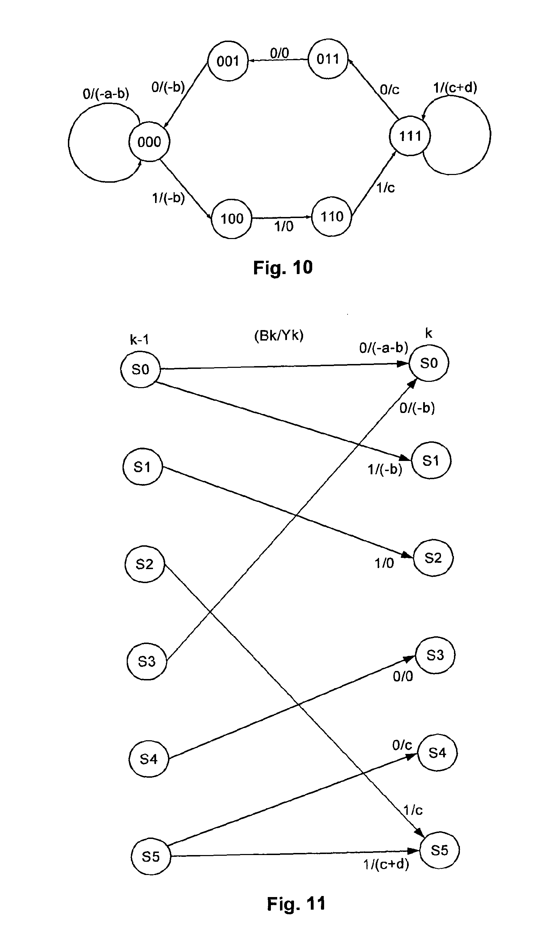

If only the channel models for DVD and CD are considered, only six states are possible since the shortest pulse length is 3T in view of the run-length limitations imposed by RLL (2,10) and RLL (2,13). The possible states transitions of these six states are depicted in Fig. 10. The corresponding Trellis diagram is shown in Fig. 11.

The output of the channel model $Y_k$ has five possible levels (0, a, a+b, a+b+c, a+b+c+d) or (-a-b, -b, 0, c, c+d) according to the RLL during the signal generation. These five levels are the partial response reference levels, which are then used for calculating the cost of a transition from one state to another possible state during signal generation.

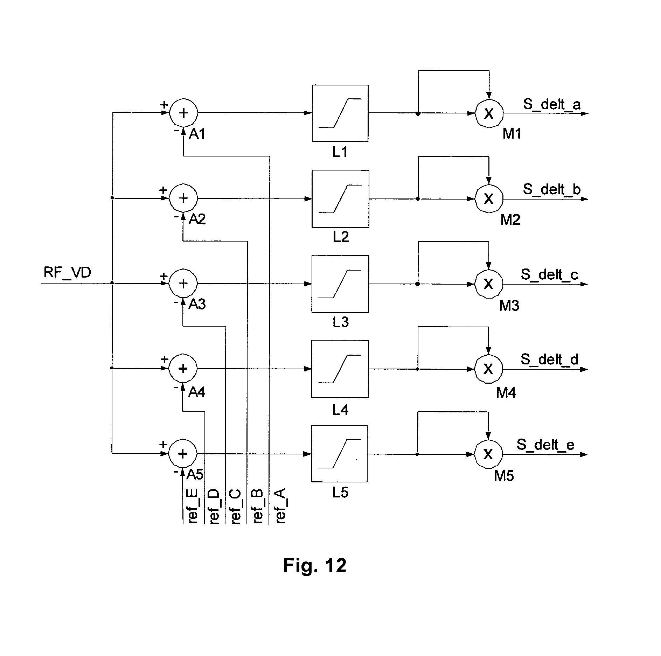

The branch metric calculation block, which is depicted in more detail in Fig. 12, calculates the branch metrics , i.e. the squared distance between the input signal and the reference level, for each state transition according to the following equations:

$$S\_delt\_a = (RF\_VD - ref\_A)^2$$

$$S\_delt\_b = (RF\_VD - ref\_B)^2$$

$$S\_delt\_c = (RF\_VD - ref\_C)^2$$

$$S\_delt\_d = (RF\_VD - ref\_D)^2$$

$$S\_delt\_e = (RF\_VD - ref\_E)^2$$

where RF_VD is the received DC-cancelled RF signal and ref_A, ref_B, ref_C, ref_D and ref_E refer to the current updated reference levels.

The results of the above equations are the branch metrics for the corresponding state transition. The state transition with the lowest branch metric obviously has the largest likelihood.

The ACS calculation block adds each branch metric to the corresponding path metrics (s_ref_s0, s_ref_s1, s_ref_s2, s_ref_s3, s_ref_s4 and s_ref_s5) of the last state transition, compares the eight possible results of path metrics with corresponding other path metrics in accordance with the Trellis diagram described in Fig. 10, and selects those six path metrics (L_0, L_1, L_2, L_3, L_4, and L_5) of the eight path metrics which indicate a larger likelihood according to the state transition diagram. The ACS calculation block also delivers a selection signal (SW0 and SW1) to the path memory for the selection of the decoded bit streams.

The six surviving path metrics are saved in six corresponding registers for offset subtraction and for the path metric calculation of the next state transition.

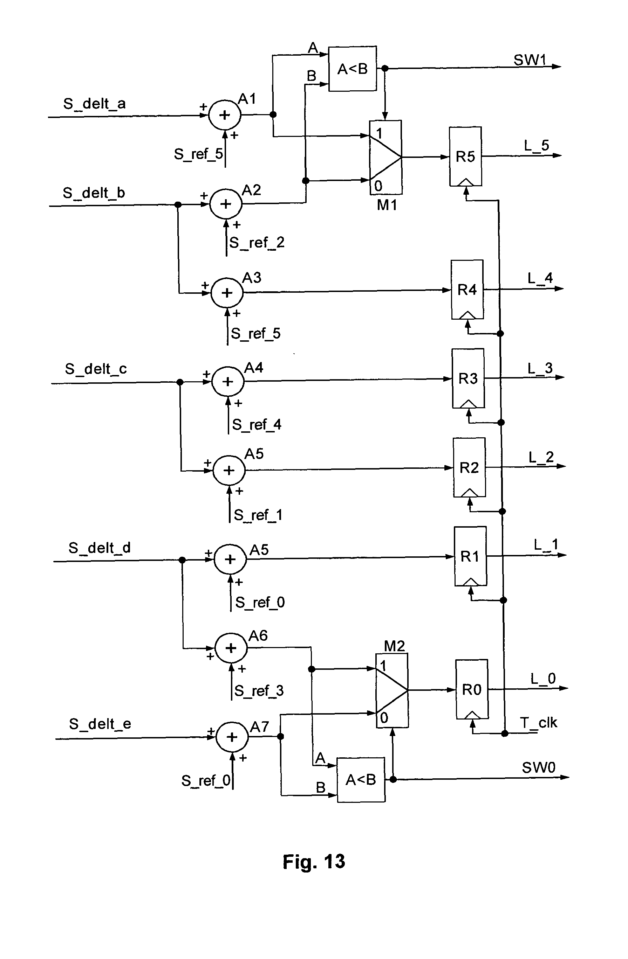

The hardware realization of the ACS calculation block is shown schematically in Fig. 13. For the ACS calculation the following algorithms are applied:

The new surviving six path metrics are selected by

$$L\_0 = min\{(s\_delt\_e + S\_ref\_0),(s\_delt\_d + S\_ref\_3)\}$$

$$L\_1 = s\_delt\_d + S\_ref\_0$$

$$L\_2 = s\_delt\_c + S\_ref\_1$$

$$L\_3 = s\_delt\_c + S\_ref\_4$$

$$L\_4 = s\_delt\_b + S\_ref\_5$$

$$L\_5 = min\{(s\_delt\_a + S\_ref\_5),(s\_delt\_b + S\_ref\_2)\}.$$

The selection signals SW0 and SW1 are decided by

$$SW\,0 = 1 \ when \ (s\_delt\_e + S\_ref\_0) > (s\_delt\_d + S\_ref\_3)$$

$$SW\,0 = 0 \ when \ (s\_delt\_e + S\_ref\_0) <= (s\_delt\_d + S\_ref\_3)$$

$$SW\,1 = 1 \ when \ (s\_delt\_b + S\_ref\_2) > (s\_delt\_a + S\_ref\_5)$$

*SW 1 = 0 when (s_delt_b + S_ref _2) <= (s_delt_a + S_ref _5).*

where (s_delt_a ... s_delt_e) are the calculated branch metrics and (s_ref_0 ... s_ref_5) are the previous six surviving path metrics.

The minimum path metric detector detects and selects the calculated path metric with minimal value. The decoded bit stream corresponding to the minimum path metric obviously has the largest likelihood. The location information of this path metric with minimum value is encoded and output for the maximum likelihood determination and reference levels adaptation.

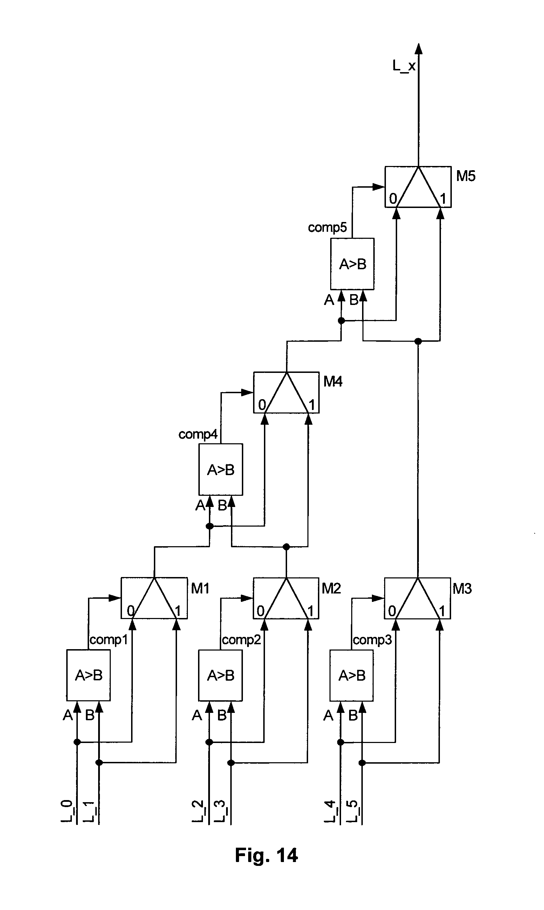

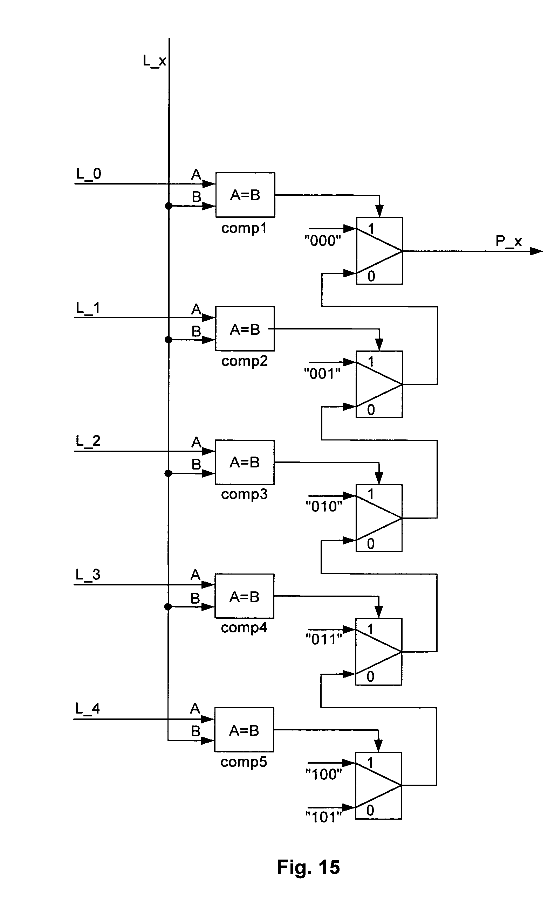

Exemplary designs of the minimum path metric detector and the position encoder are shown in Fig. 14 and Fig. 15.

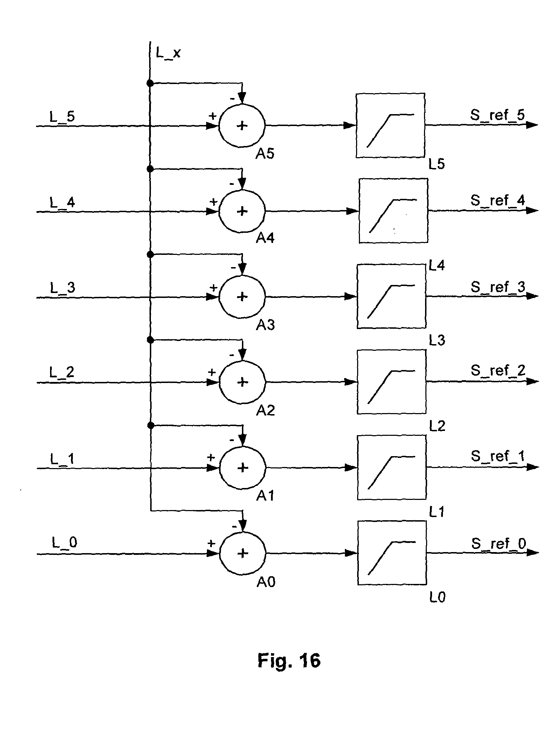

The base value of the path metrics, which is the minimum value of the six surviving path metrics, and which is detected by the minimum path metric detector, is subtracted from the current calculated and selected six surviving path metrics for reducing the data range. These offset-subtracted path metrics are then passed to the ACS block for the next state transition path metric calculation. The detailed design is shown in Fig. 16. The offset subtraction is introduced for limiting the path metric data range and reducing the hardware implementation.

The path memory always keeps those current six surviving decoded bit streams, which are selected from the eight possible streams according to the selection signals SW0 and SW1 delivered from the ACS calculation block, that have a larger likelihood. This selection processing is carried out for every state transition in the path memory, as it is impossible to implement an infinite path memory length in hardware for realizing an unlimited selection processing. It is assumed that the least recent decoded bits of the six surviving decoded bit streams have a sufficiently large likelihood after a finite path memory (finite selection).

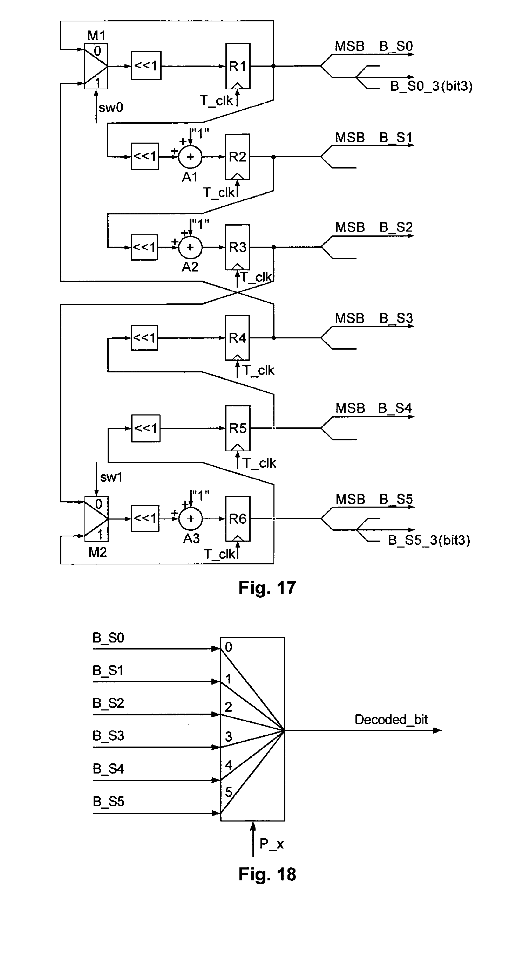

The above mentioned six surviving decoded bit streams are saved in six corresponding registers, which are implemented as indicated in Fig. 17. The bit widths of the registers are the length of path memory. These six registers are updated with six new surviving decoded bit streams for every state transition in accordance with their previous values and the selection information SW0 and SW1. The surviving bit stream selection processing is accomplished by multiplexers M1 and M2. The MSBs (most significant bits) of the registers, which are the least recent decoded bits, are output to the maximum likelihood determination block for the final bit output determination.

The maximum likelihood determination block determines the final bit output of the decoded bits from the least recent decoded bits of the six current surviving decoded bit streams. The final output bit is the bit having the largest maximum likelihood within the six surviving decoded bit streams.

The determination is made by means of the current location information of the path metric with minimum value, which is encoded in the minimum path metric detector block. This determination processing is realized simply through a multiplexer as shown in Fig. 18.

Differently from a conventional Viterbi detector, the adaptation function in the present adaptive Viterbi detector is realized by the adaptive reference levels, which are based on the signal generation with the PR (a, b, c, d) characteristic having the channel model as illustrated in Fig. 2.

Every adaptive reference level consists of two parts: a fixed reference level (e.g. (-7, -4, 0, 4, 7) for PR (3, 4, 4, 3)) and an adaptive part ($\Delta_E$, $\Delta_D$, $\Delta_C$, $\Delta_B$, $\Delta_A$). The adaptive part is obtained from the deviation between the current input RF level and the reference level, which is decided by the current partial response maximum likelihood.

The relationship between the adaptive channel model and the adaptive reference level is as follows. For the signal generation with PR (a, b, c, d) characteristic, the five possible reference levels are (0, a, a+b, a+b+c, a+b+c+d). When these reference levels are floated with the offset "a+b" they can be written as (-a-b, -b, 0, c, c+d).

When the fixed reference levels are based on the reference levels with e.g. PR (3, 4, 4, 3) characteristic, the partial response coefficients (a, b, c, d) can be written as

$$a = 3 + \delta_a$$

$$b = 4 + \delta_b$$

$$c = 4 + \delta_c$$

$$d = 3 + \delta_d.$$

Therefore, the relationship between the adaptive part of the reference levels (($\Delta_E$, $\Delta_D$, $\Delta_C$, $\Delta_B$, $\Delta_A$) and the adaptive part of the partial response coefficients ($\delta_a$, $\delta_b$, $\delta_c$, $\delta_d$) can be obtained as

$$\Delta_E - \Delta_C = -\delta_a - \delta_b$$

$$\Delta_D - \Delta_C = -\delta_b$$

$$0 = 0$$

$$\Delta_B - \Delta_C = \delta_c$$

$$\Delta_A - \Delta_C = \delta_c + \delta_d.$$

The adaptive part of the reference levels is updated for every state transition according to the current state with the largest likelihood and the location information of the minimum path metric.

Because there is only one current state with the largest likelihood, only one reference level is updated within one state transition. The selection of the current reference level to be updated is accomplished by a logical decoding of the location information of the minimum path metric and the bit3 information (B_S0_3 and B_S5_3) in the current first and last surviving decoded bit streams that are saved in the path memory.

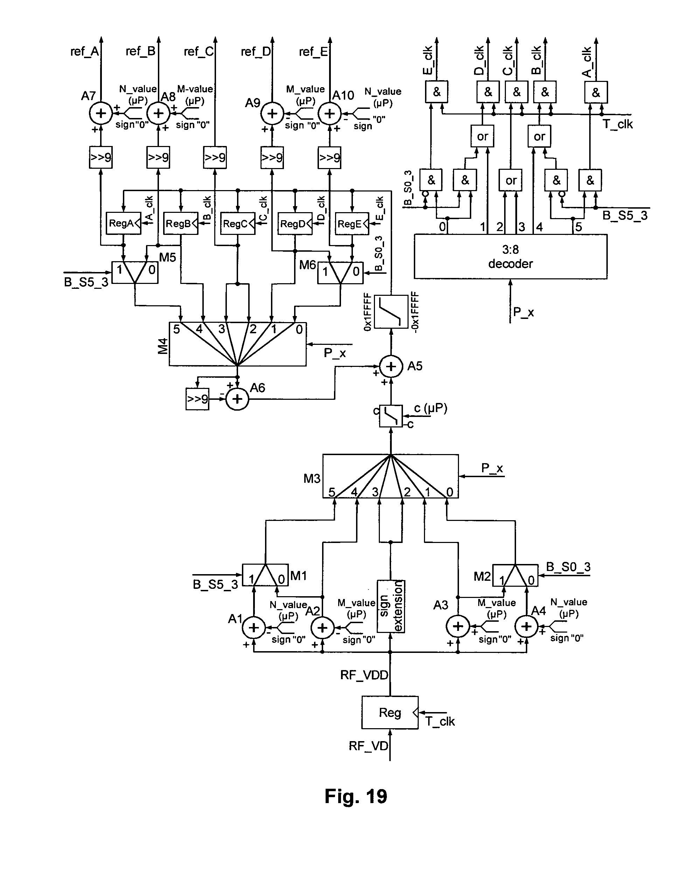

The detailed hardware realization is depicted in Fig. 19. The fixed part of the reference levels are the M_value and N_value respectively. The deviations between the input RF level and the fixed reference levels are calculated and one of them is selected according to the current state with the largest likelihood. The selected deviation is smoothed by a low-pass filter and saved in its corresponding register (registers A...E) according to the location information of the minimum path metric and the current bit3 information in the first and last surviving bit streams. The fixed and the adaptive parts of the reference levels are then joined together and form the adaptive reference levels of the Viterbi detector for the next branch metric calculation. By means of the adaptive part and the selection logic, the reference levels are self-optimised for the adaptation to the input RF signal.

Though the invention has been described with reference to restoring data from the high-density optical recording media (CD/DVD/BD) with an asymmetrical signal, the general idea of the invention is also applicable to magnetic media (tape/disk) as well as the technical fields based on digital baseband transmission and communication.

**Claims**

1. Viterbi detector with adaptive reference levels for bit recovery from an input RF signal, in which the reference levels are adaptive to the incoming RF signal, **characterized in that** it includes means for optimising the reference levels for every state transition based on the deviation between the input RF level and the corresponding reference level, which is determined by the current state with the largest likelihood.

2. Viterbi detector according to claim 1, **wherein** an optimised base reference level is also used for correcting a slicer level for improving the phase locking in a digital phase-locked loop (DPLL).

3. Viterbi detector according to claim 1 or 2, **wherein** an enhanced channel model for an RF signal generator is used, which allows to describe the vertical asymmetrical RF signal with asymmetrical PR coefficients, which are based on symmetrical fixed PR coefficients and are compensated with the deviations from these symmetrical and fixed PR coefficients.

4. Viterbi detector according to one of claims 1 to 3, **wherein** a digital automatic gain control (DAGC) block detects the RF amplitude and provides a prompt proportional RF amplitude adjustment.

5. Viterbi detector according to claim 4, **wherein** the difference between the upper and lower envelopes of the longest pulses is used for the RF amplitude measurement.

6.  Viterbi detector according to one of claims 1 to 5, **wherein** a DC-offset is detected from the output decoded bit and a corresponding signal is fed back to the input RF signal for cancelling the DC-part in the output decoded bit.

7.  Viterbi detector according to claim 6, **wherein** the RF signal is further corrected by the base reference level.

8.  Viterbi detector according to one of claims 1 to 7, **wherein** in the reference level determination block, the five channel reference levels share one low-pass filter.

9.  Apparatus for reading from and/or writing to recording media, **characterized in that** it includes a Viterbi detector according to one of claims 1 to 8 for bit recovery from an input RF signal.

**Fig. 1**

**Fig. 2**

EP 1 587 234 A1

Fig. 3

11

Fig. 4

**Fig. 5**

**Fig. 6**

Fig. 7

Fig. 8

Decoded Bit

Maximum-
Likelihood
determination

P_x

min L_x Offset
subtraction

B_S0
B_S1
B_S2
B_S3
B_S4
B_S5

L_0
L_1
L_2
L_3
L_4
L_5

S_ref_0
S_ref_1
S_ref_2
S_ref_3
S_ref_4
S_ref_5

Path memory Sw1 ACS
Calculation

Sw0

B_S0_3    B_S5_3

S_delt_a
S_delt_b
S_delt_c
S_delt_d
S_delt_e

ref_E

ref_D

Branch metric
calculation

Reference Level
determination

B_S5_3

ref_C

ref_B

B_S0_3

ref_A

RF_VD

reg
T_clk

RF (sliced & offset)

**Fig. 9**

**Fig. 10**

**Fig. 11**

Fig. 12

**Fig. 13**

18

Fig. 14

L_x

L_0    A

B    A=B

comp1

"000"   1

0

P_x

L_1    A

B    A=B

comp2

"001"   1

0

L_2    A

B    A=B

comp3

"010"   1

0

L_3    A

B    A=B

comp4

"011"   1

0

L_4    A

B    A=B

comp5

"100"   1

"101"   0

**Fig. 15**

20

**Fig. 16**

**Fig. 17**

**Fig. 18**

**Fig. 19**

23

EP 1 587 234 A1

**European Patent Office**

**EUROPEAN SEARCH REPORT**

Application Number

EP 04 00 8831

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/071194 A1 (HONMA HIROMI) 13 June 2002 (2002-06-13) | 1,2 | H04L1/00 H04L25/06 |
| Y | * paragraph [0085] - paragraph [0091]; figure 13 * | 3 | |
| D,Y | IDE N: "Adaptive partial-response maximum-likelihood detection in optical recording media" INTERNATIONAL SYMPOSIUM ON OPTICAL MEMORY AND OPTICAL DATA STORAGE TOPICAL MEETING, 7 July 2002 (2002-07-07), pages 269-271, XP010600195 | 3 | |
| A | * page 269, last paragraph - page 270, paragraph 1; figures 1-3 * | 1,2 | |
| A | US 5 648 949 A (MATSUMOTO KIYOSHI ET AL) 15 July 1997 (1997-07-15) * column 2, line 1 - line 15 * * column 4, line 40 - column 5, line 4; figures 1,5 * * column 5, line 34 - line 54 * * column 7, line 6 - line 37 * | 1,3 | |
| A | US 5 588 011 A (RIGGLE C M) 24 December 1996 (1996-12-24) * column 4, line 1 - line 13 * * column 8, line 26 - line 37 * | 1-3 | TECHNICAL FIELDS SEARCHED (Int.Cl.7) H04L |
| A | EP 1 045 392 A (FUJITSU LTD) 18 October 2000 (2000-10-18) * paragraphs [0024], [0025], [0034] * | 1-3 | |

~~The present search report has been drawn up for all claims~~

| Place of search | Date of completion of the search | Examiner |
|---|---|---|
| Munich | 29 November 2004 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent
Office

**Application Number**

EP 04 00 8831

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3

**European Patent Office**

**LACK OF UNITY OF INVENTION SHEET B**

Application Number

EP 04 00 8831

The Search Division considers that the present European patent application does not comply with the requirements of unity of invention and relates to several inventions or groups of inventions, namely:

1. claims: 1-3

   Use of an enhanced channel model for an RF signal generator in a Viterbi detector

   ---

2. claims: 4-5

   Digital amplitude gain control in a Viterbi detector

   ---

3. claims: 6-8

   DC offset correction in a Viterbi detector

   ---

## ANNEX TO THE EUROPEAN SEARCH REPORT
## ON EUROPEAN PATENT APPLICATION NO.

EP 04 00 8831

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2004

| Patent document cited in search report | | Publication date | Patent family member(s) | | Publication date |
|---|---|---|---|---|---|
| US 2002071194 | A1 | 13-06-2002 | JP | 2002175673 A | 21-06-2002 |
| US 5648949 | A | 15-07-1997 | JP | 8287609 A | 01-11-1996 |
| US 5588011 | A | 24-12-1996 | AU | 3364295 A | 07-03-1996 |
| | | | WO | 9605593 A1 | 22-02-1996 |
| EP 1045392 | A | 18-10-2000 | JP | 2000243041 A | 08-09-2000 |
| | | | EP | 1045392 A2 | 18-10-2000 |
| | | | US | 6151282 A | 21-11-2000 |

EPO FORM P0459

For more details about this annex : see Official Journal of the European Patent Office, No. 12/82